# EUROPEAN PATENT SPECIFICATION

(11) **EP 2 387 879 B1**
(45) Date of publication and mention of the grant of the patent: **02.10.2013**
(21) Application number: 11159943.7
(22) Date of filing: 28.03.2011
(51) Int. Cl.: A01K 1/02

(54) **Transport box for pets**
Transportkorb für Haustiere
Cage de transport pour animaux

(30) Priority: 20.05.2010 IT VI20100028 U
(43) Date of publication of application: 23.11.2011
(73) Proprietor: MPS 2 SRL, 36051 Creazzo (VI) (IT)
(72) Inventor: Tamiozzo, Giovanni Battista, 36050, Sovizzo (Vicenza) (IT)
(74) Representative: Bettello, Pietro

(56) References cited:
- US-A- 4 852 520
- US-A1- 2002 092 477
- US-A1- 2008 174 946

## Description

The present model concerns a transport box for pets, according to the general part of claim 1.

It is known that most transport boxes for pets (typically cats and dogs, but ever increasingly also rabbits, hamsters and rodents in general), are made up of an element comprising two half-shells having substantially identical shapes and sizes, to be overlappingly arranged, with the respective concavities facing one another. These two half-shells form the two halves of the transport box, arranged in a symmetrical manner with respect to the horizontal middle plane thereof. It is also foreseen for the transport box to have, with the two half-shells overlapping one another, an opening that can be closed by means of a door, a grate or similar, so as to allow the animal to be introduced inside it and to prevent it from coming out when it is desired to keep it inside the transport box. As documents of the state of the art the following documents can be cited : US 2002/092477, US 4852320, US 2008/174946.

Of course means are foreseen that allow the two half-shells to be reversibly fixed together. Currently these means consist of various kinds of tabs, hinged to one of the two half-shells and suitable to be elastically locked at portions of the opposite half-shell. Alternatively, pins are foreseen that are fixed to one of the half-shells, suitable for being deformed and for then penetrating in suitable holes formed in the opposite half-shell. Once entered inside these holes the pins re-expand, obtaining the reversible locking of the two half-shells.

These construction modalities do not of course cover all the embodiments known for obtaining the fixing together. It is however necessary to consider that the transport box must have a rather low cost for the public, even because there is a considerable amount of similar products on the market and the competition is very high. In practical use, only quite expensive closing means have proven practical to use, reliable and long-lasting. *Vice versa,* the other more cost-effective embodiments have proven to be less reliable and safe. In particular it is necessary to consider that, in the case of breaking or of bad operation of the means that allow the reciprocal fixing of the two half-shells, it is practically impossible for the user to provide for completely repairing the transport box, since it is practically impossible to find spare parts, which are hardly ever put on the market. This, therefore, leads to the need of the user to have to dispose of the entire transport box, unless trying to repair the aforementioned box in some manner by means of glues or similar temporary means, which replace the broken elements or that in any case do not work properly.

The purpose of the present model is that of providing a transport box for pets, that is equipped with means for fixing together its two half-shells that are intrinsically cost effective to manufacture and that, at the same time, are easy to use, as well as being extremely reliable. This is obtained by foreseeing that, and according to claim 1, on the edge of the two half-shells, arranged in contact with the edge of the other half shell, there is a plurality of "L"-shaped projections, which with their longest side arranged horizontal, are positioned in a hole present in the opposite edge. These projections remain locked here after the mutual sliding of the two half-shells, thanks to the contact between their horizontal sides and the edge of said holes. Means are also foreseen suitable for obtaining the reversible locking of the mutual sliding of the two half-shells at the position in which the reciprocal fixing of their two edges is obtained.

These and other characteristics of the model shall be described hereafter in detail, with reference to one of its particular embodiments, given as an example and not for limiting purposes, with the help of the attached drawing tables, in which:
- figures 1 and 2 (Table I-II) illustrate two perspective views of the transport box according to the model;
- figures 3 and 4 (Table III-IV) illustrate two views that show, respectively, one of the two half-shells that form the transport box according to the model, seen at its inner part;

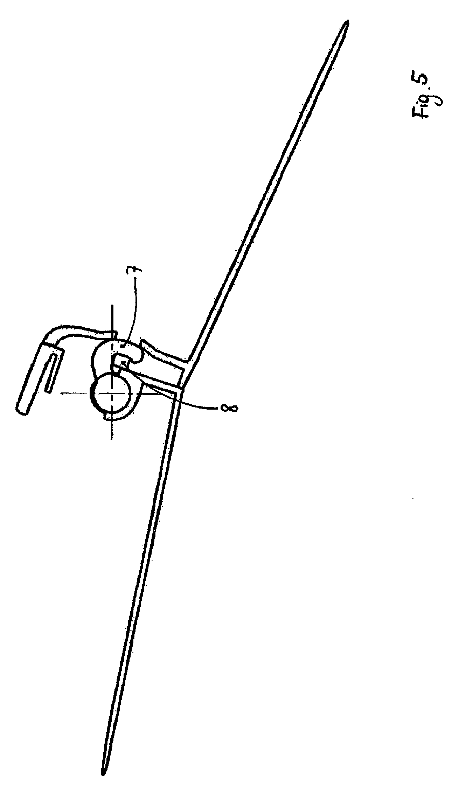

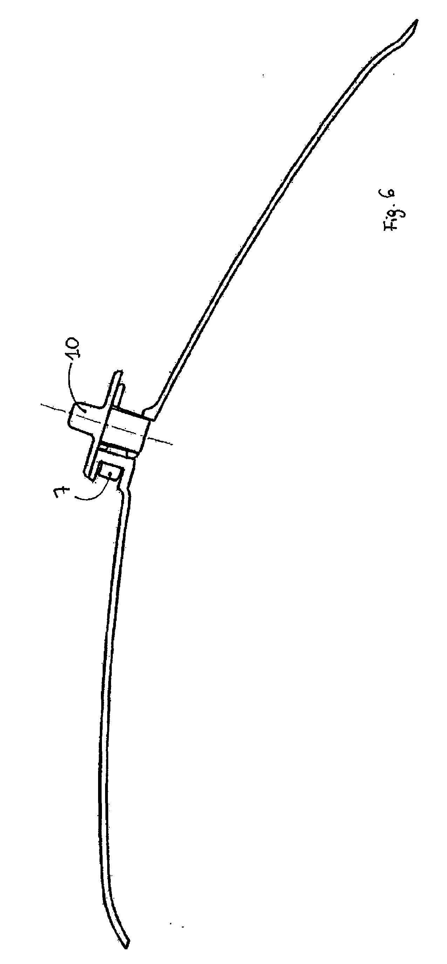

- figures 5 and 6 (Table V-VI) illustrate two schematic section views of the means that obtain the fixing of the two half-shells of the transport boxes according to the model.

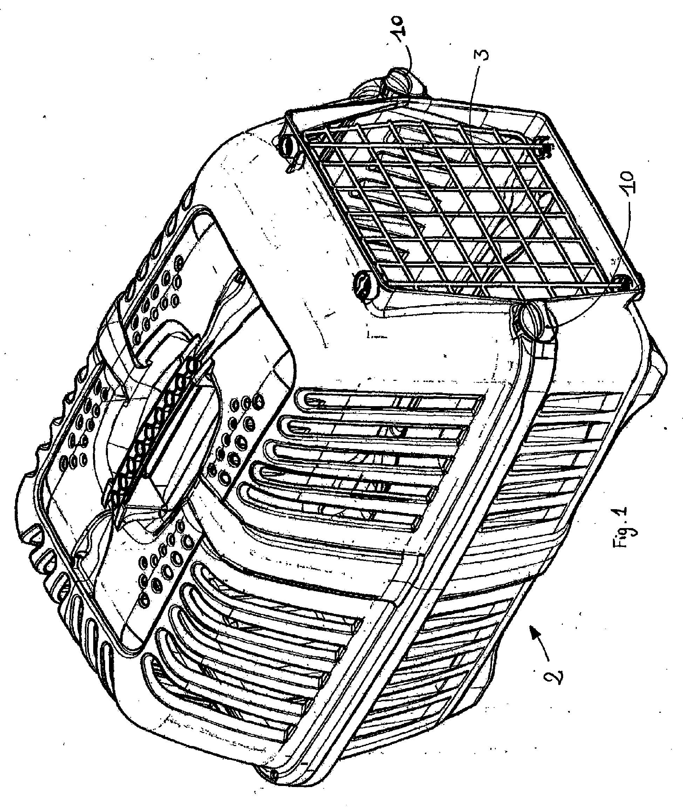

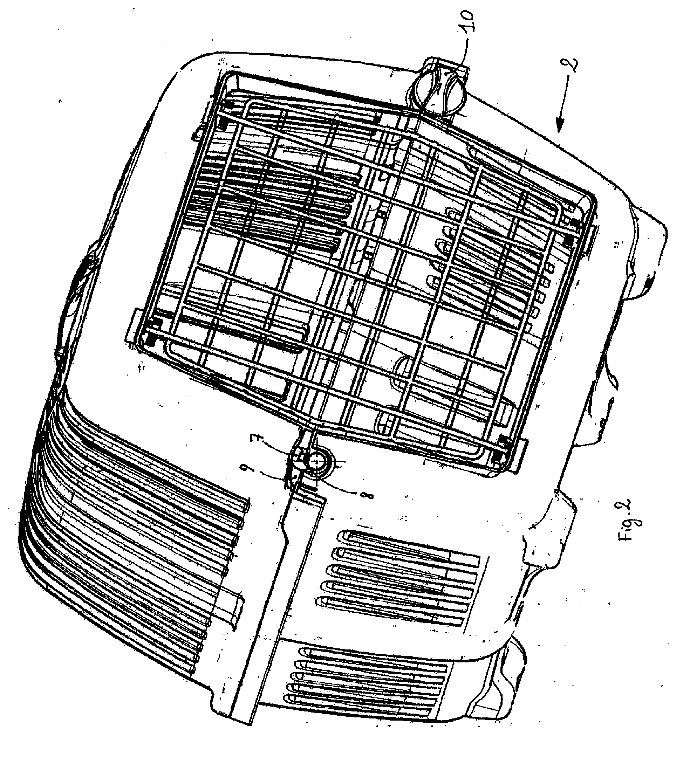

As visible in figures 1 and 2, the transport box according to the model, in a *per se* known manner, is of the type having a pair of half-shells 1, 2, with substantially identical sizes, to be overlappingly arranged, so that their respective concavities face one another. From such figures it should be noted that, from the practical point of view, such half-shells form the two halves of the transport box, arranged in a symmetrical manner with respect to a horizontal middle plane of the aforementioned box. The transport box, again in a *per se* known manner, once the two half-shells overlap one another, has an opening that can be closed by means of a grate 3, which can be replaced by a door or similar. Such an opening that can be closed is obtained by means of a suitable configuration of a portion of the two half-shells. Normally, this shutter or door is arranged at one of the faces of the transport box having smaller dimensions.

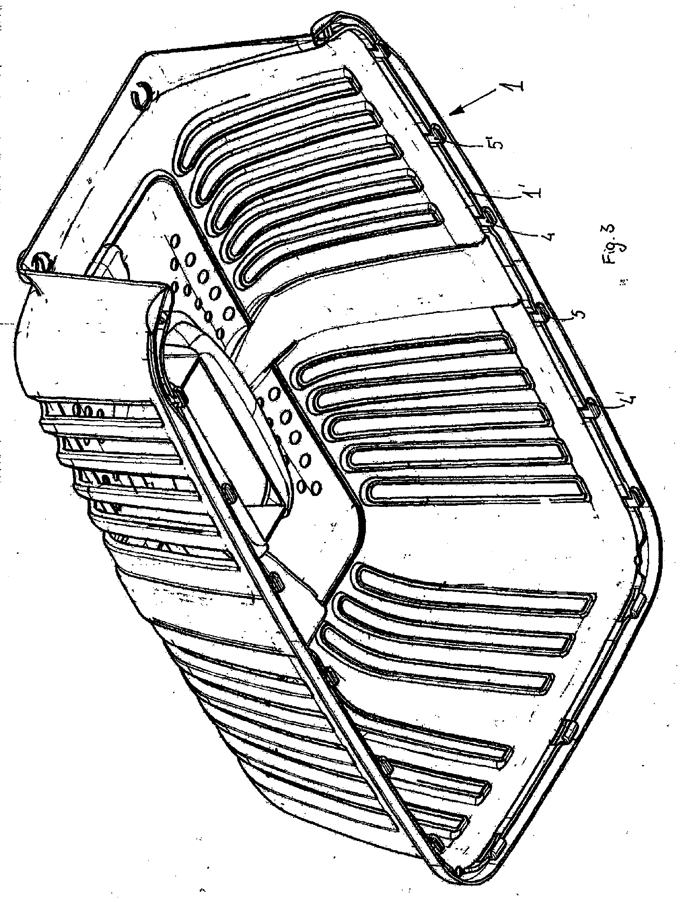

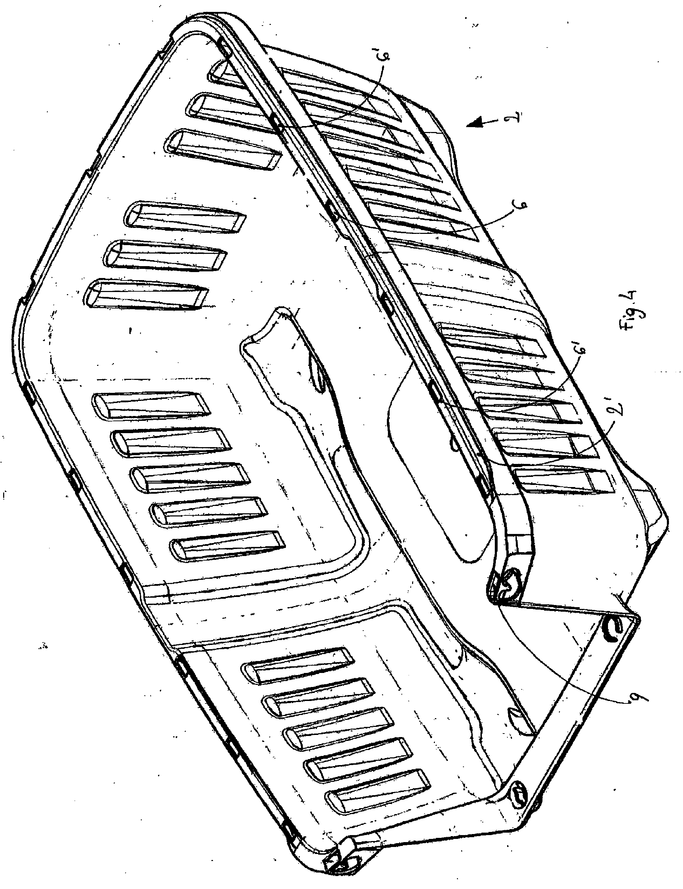

By carefully observing figures 3 and 4 it shall be noted that, at the edge 1' of one of the two half-shells 1 (in this case the upper one, but it could equally be the lower half-shell) there is a plurality of "L"-shaped projections 4. Vice versa, at the edge 2', opposite to the edge 1' present on the other half-shell 2, it is particularly foreseen for the sides 5 of the projections 4, that are arranged horizontally, to be intended to be placed in the holes 6, remaining locked there after the sliding of said two half-shells, thanks to the contact between their horizontal sides 5' and the edge 6' of said holes.

The means described above are extremely simple to use and make it possible to efficiently reversibly fix the two half-shells together. It is of course necessary to provide means suitable for preventing the mutual sliding of the two half-shells in conditions of normal use of the transport box.

For this purpose, it is foreseen that, at one of the sides 2' of the lower half-shell 2, there is a hook 7, equipped with means that allow it to rotate with respect to an axis perpendicular to the plane on which there is the hook itself. Such a hook is able to hook, at a well defined angular position, onto a pin 8 belonging to the edge 1' of the opposite shell 1, obtaining, in this position, the reciprocal locking of the two edges of the half-shells at said position. In order to allow an easy rotation of the hook, according to the particular requirements of the user, the aforementioned shall be fixedly attached to a knob 10 (see in particular figures 1 and 2). From the practical point of view, there will be two hooks 7 and therefore also two pins 8 and two knobs 10, and shall be advantageously foreseen adjacent to the inlet door or grate of the transport box. From the operative point of view, the hook 7 may be foreseen without distinction at the edge 2' of the half-shell 2, as illustrated in the attached figures and therefore with the pin 8 belonging to the edge 1' of the opposite shell 1 or the arrangements of the hook and the pin can be swapped, being positioned at the other opposite edge. Moreover, as can be seen in figure 2, the pin 8 on which the hook 8 is intended to hook, shall be advantageously formed in a recess 9 present on the opposite edge of the half-shell opposite with respect to that in which there is the hook 7 and therefore the knob 10.

From what has been described previously it can thus be seen how the device according to the model is particularly simple from the constructive point of view, in particular the means that determine the reversible fixing together of the two half-shells ensure a safe fixing between these two elements and also allow the user to easily lock together and release the two shells. This certainly makes it possible to state that the purposes of the present model, previously outlined, have been fully achieved.

## Claims

1. TRANSPORT BOX FOR PETS, of the type comprising two half-shells (1, 2) having substantially identical shapes and sizes, to be arranged in an overlapping manner, with the respective concavities facing one another, said half-shells forming the two halves of the transport box, arranged in a symmetric manner with respect to a horizontal middle plane thereof, wherein it is foreseen for the transport box, with the two overlapping half-shells, to have an opening that can be closed by means of a door, grate (3) or similar, wherein there are means which allow the two half-shells to be reversibly fixed together, said transport box being **characterised in that** on the edge (1') of one of the two half-shells (1), which is placed in contact with the edge (2') of the other half-shell (2), there is a plurality of "L"-shaped projections (4), which, with their side (5) arranged horizontally, are each placed inside a hole (6) present in the opposite edge (2'), remaining locked there due to the mutual sliding of said two half-shells, thanks to the contact between their horizontal sides (5') and the edge (6') of said holes, wherein there are also means that obtain the reversible locking of the mutual sliding of the two half-shells at the position in which there two edges are fixed together.

2. TRANSPORT BOX, according to claim 1, **characterised in that**, at at least one of the sides of the edge of one of the half-shells which is placed in contact with the edge of the opposite half-shell, there is a hook (7) equipped with means which allow its rotation with respect to an axis perpendicular to the plane on which the hook itself lies, said hook being able to hook, at a well defined angular position thereof, onto a pin (8) belonging to the edge of the opposite half-shell, obtaining the reciprocal locking of the two edges of the half-shells at said angular position of the hook.

3. TRANSPORT BOX, according to claim 2, **characterised in that** the hook has the possibility of being made to rotate with its axis perpendicular to the edge of the half-shell of the transport box on which it is positioned, being it foreseen for the pin (8), on which the hook is intended to be hooked, is formed in a recess (9) present on the opposite edge of the half-shell opposite with respect to that in which there is the hook (7).

4. TRANSPORT BOX, according to claims 2 or 3, **characterised in that** a knob (10), which makes it possible to easily rotate it when desired by the user, is fixed to the hook (7).

5. TRANSPORT BOX, according to one or more of claims 2 to 4, **characterised in that** it is foreseen for there to be a pair of hooks (7) at two opposite sides of the opening of the transport box that can be closed by means of a door, a grate or similar.

## Patentansprüche

1. TRANSPORTBOX FÜR HAUSTIERE umfassend zwei Halbschalen (1, 2), die im Wesentlichen gleiche Gestalten und Größen aufweisen, die für eine übereinanderliegende Anordnung mit jeweiligen gegenüberliegenden Konkavitäten ausgelegt sind, wobei die Halbschalen die zwei Hälfte der Transportbox darstellen, die symmetrisch mit Bezug auf einem waagerechten mittleren Plan derselben angeordnet sind, worin vorgesehen ist, dass, wenn die zwei Halbschalen übereinanderliegen, die Transportbox eine durch eine Tür, ein Gitter (3) oder dergleichen schließbare Durchbrechung aufweist, wobei Mittel vorgesehen sind, die den zwei Halbschalen ermöglichen, miteinander reversibel zusammengesetzt zu werden, wobei die Transportbox **dadurch gekennzeichnet ist, dass** eine Vielzahl von "L"-förmigen Vorsprüngen (4) auf dem Rand (1') einer der zwei Halbschalen (1), der im Kontakt mit dem Rand (2') der anderen Halbschale (2) liegt, vorgesehen ist, die, wenn ihre Seiten (5) waagerecht angeordnet liegen, jeweils jeder in einen sich im gegenüberliegenden Rand (2') befindenden Loch (6) eindringen, sodass sie dort wegen des wechselseitigen Laufens der zwei Halbschalen verriegelt bleiben, dank dem Kontakt zwischen ihren waagerechten Seiten (5') und dem Rand (6') solcher Löcher, wobei auch Mittel vorgesehen sind, welche die reversible Blockierung des wechselseitigen Laufens der zwei Halbschalen in der Position, in der die zwei Ränder zusammengesetzt werden, ermöglichen.

2. TRANSPORTBOX, nach Anspruch 1, **dadurch gekennzeichnet, dass** auf mindestens einer Randseite einer der Halbschalen, die im Kontakt mit dem Rand der gegenüberliegenden Halbschale liegt, ein Haken (7) vorgesehen ist, der mit Mittel ausgestattet ist, die seine Rotation um eine zur Haken-Liegenebene senkrechte Achse ermöglichen, wobei solcher Haken in einer genau definierten Winkelposition dazu geeignet ist, auf einem dem Rand der gegenüberliegenden Halbschalen gehörenden Bolzen (8) angehakt zu werden, sodass die wechselseitige Blockierung der zwei Ränder der Halbschalen in der Hakenwinkelposition erhalten wird.

3. TRANSPORTBOX, nach Anspruch 2, **dadurch gekennzeichnet, dass** der Haken drehbar ist um eine dem Halbschalenrand der Transportbox senkrechte Achse, worauf solcher Haken aufgeordnet ist, wobei vorgesehen ist, dass der Bolzen (8), auf dem der Haken angehakt werden muss, in einer Ausnehmung (9) angeordnet ist, welche sich auf dem gegenüberliegenden Rand der Halbschale als dem, wo der Haken liegt, befindet.

4. TRANSPORTBOX nach Anspruch 2 oder 3, **dadurch gekennzeichnet, dass** ein Drehknopf (10) am Haken (7) angebracht ist, der seine einfache Drehung ermöglicht, wenn vom Benutzer gewünscht.

5. TRANSPORTBOX nach einem oder mehreren der Ansprüche 2 bis 4, **dadurch gekennzeichnet, dass** ein paar Haken (7) auf zwei gegenüberliegenden Seiten der Transportboxdurchbrechung, die durch eine Tür, ein Gitter oder dergleichen schließbar ist, vorgesehen ist.

## Revendications

1. CAISSE DE TRANSPORT POUR ANIMAUX DE COMPAGNIE, du type comprenant deux demi-coques (1, 2), ayant sensiblement le même profil et la même taille, adaptées à être placées d'une façon superposée, les respective concavités faisant face l'une à l'autre, lesdites demi-coques formant les deux moitiés de la caisse de transport, disposées d'une manière symétrique par rapport à un plan moyen horizontal de celle-ci, où il est prévu que la caisse de transport, ayant les deux demi-coques superposées, ait une ouverture qui peut être fermée au moyen d'une porte, d'une grille (3) ou similaires, dans laquelle des moyens sont présents qui permettent de fixer les deux demi-coques entre elles d'une manière réversible, ladite caisse de transport étant **caractérisée en ce que** sur le bord (1') de l'une desdites demi-conques (1), qui est mis en contact avec le bord (2') de l'autre demi-coque (2), il y a une pluralité de saillies en forme de L (4), qui, ayant leur côté (5) placé horizontalement, sont chacune placées à l'intérieur d'un trou (6) qui se trouve sur le bord opposé (2'), en restant verrouillées là-bas à cause du coulissement réciproque desdites deux demi-coques, grâce au contact entre leurs côtés horizontaux (5') et le bord (6') desdits trous, où il ya également des moyens qui atteignent le verrouillage réversible du coulissement réciproque des deux demi-coques dans une position dans laquelle les deux bords sont fixés l'un à l'autre.

2. CAISSE DE TRANSPORT selon la revendication 1, **caractérisée en ce que**, sur au moins un côté du bord de l'une des demi-coques, qui est placé en contact avec le bord de la demi-coque opposée, se trouve un crochet (7) pourvu de moyens qui permettent le pivotement de celui-ci par rapport à un axe perpendiculaire au plan sur lequel est situé le crochet, ledit crochet pouvant s'accrocher, dans une position angulaire bien définie de celui-ci, à une broche (8) appartenant au bord de la demi-coque opposée, entrainant le verrouillage réciproque des deux bords des demi-coques dans ladite position angulaire du crochet.

3. CAISSE DE TRANSPORT selon la revendication 2, **caractérisée en ce que** le crochet a la possibilité d'être pivoté avec son axe perpendiculaire au bord de la demi-coque de la caisse de transport sur lequel il est placé, étant prévu que la broche (8), sur laquelle le crochet doit s'accrocher, est formée dans un évidement (9) présent sur le bord opposé de la demi-coque opposée à celle sur laquelle se trouve le crochet (7).

4. CAISSE DE TRANSPORT selon la revendication 2 ou 3, **caractérisée en ce que** une poignée (10), qui peut être facilement tournée par l'utilisateur à chaque fois que l'on le souhaite, est fixée au crochet (7).

5. CAISSE DE TRANSPORT selon l'une ou plusieurs des revendications de 2 à 4, **caractérisée en ce que** une couple de crochets (7) est fournie sur deux côtés opposés de l'ouverture de la caisse de transport qui peut être fermée au moyen d'une porte, d'une grille ou similaires.
